(19) Europäisches Patentamt
European Patent Office
Office européen des brevets

(11) EP 3 915 805 A1

(12) EUROPÄISCHE PATENTANMELDUNG

(43) Veröffentlichungstag:
01.12.2021  Patentblatt 2021/48

(51) Int Cl.:
B60B 21/02 (2006.01)

(21) Anmeldenummer: 20176568.2

(22) Anmeldetag: 26.05.2020

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Borbet GmbH
59969 Hallenberg (DE)

(72) Erfinder:
• Jürgens, Klaus
59939 Olsberg (DE)
• Engel, Bernd
59969 Bromskirchen (DE)

(74) Vertreter: MERH-IP Matias Erny Reichl Hoffmann
Patentanwälte PartG mbB
Paul-Heyse-Strasse 29
80336 München (DE)

(54) **FELGE ZUR GERÄUSCHREDUZIERUNG FÜR EIN FAHRZEUGRAD**

(57) Die Erfindung betrifft eine Felge 2 und ein Rad 1 für ein Kraftfahrzeug, die Maßnahmen zur Reduktion des Reifenkavitätsgeräusches aufweisen und damit zur Geräuschreduzierung im Fahrzeuginnenraum beitragen. Vorteilhaft ist, dass die geräuschmindernden Merkmale der Felge integraler Bestandteil der Felge sind und ohne zusätzliche Arbeitsschritte während des Radherstellungsprozesses ausgebildet werden können. Der Bauraum für angrenzende Bauteile wird ebenfalls nicht beeinträchtigt.

Fig. 5

**Beschreibung**

Die vorliegende Offenbarung betrifft eine Felge und ein Rad für ein Kraftfahrzeug, die dazu eingerichtet sind, Reifenkavitätsgeräusche zu reduzieren, insbesondere um eine Geräuschreduzierung im Innenraum des Kraftfahrzeuges zu erreichen. Vorteilhaft ist, dass die geräuschmindernden Merkmale der Felge integraler Bestandteil der Felge sind und ohne zusätzliche Arbeitsschritte während des Radherstellungsprozesses ausgebildet werden können. Der Bauraum für angrenzende Bauteile wird ebenfalls nicht beeinträchtigt.

Die Akustik im Fahrzeuginnenraum ist ein wichtiger Faktor bei der Entwicklung von Kraftfahrzeugen im Hinblick auf den Fahrkomfort und den damit verbundenen Sicherheitsaspekten. Insbesondere bei Elektrofahrzeugen, deren Antrieb erheblich leiser ist als der von verbrennungskraftgetriebenen Fahrzeugen, stellt die Geräuschentwicklung durch den Rollkontakt des Reifens auf der Fahrbahn eine Hauptquelle der Geräuschemissionen dar. Über den Radträger, das Fahrwerk und die Karosserie gelangen Reifen-Fahrbahn-Geräusche in den Fahrzeuginnenraum und bestimmen insbesondere bei mittleren Geschwindigkeiten die von den Insassen wahrgenommenen Fahrzeuggeräusche. Dabei ist das sogenannte Reifenkavitätsgeräusch in den meisten Fahrzeugen die Hauptursache für die im Innenraum wahrgenommenen störenden Geräusche. Das Reifenkavitätsgeräusch kommt durch stehende Wellen im Hohlraum des Reifens zustande, die zu hohen Wechselkräften auf die Felge und damit auf das Fahrwerk führen. Aufgrund der geringen Schalldämpfung im Reifenhohlraum zeigt sich das Kavitätsgeräusch schmalbandig, laut und lange nachklingend und beeinflusst damit die Geräuschqualität im Fahrzeuginnenraum negativ.

Insbesondere der Kontakt zwischen Fahrbahn und Reifen regt den Reifengürtel zu Schwingungen an, die Druckschwankungen in den Luftraum des Reifens einleiten. Dies führt zu stehenden Wellen in der Luftsäule des Reifentorus. Die Anregung beruht im Wesentlichen auf der durch das Abrollverhalten des Reifens erzwungenen lokalen Einbiegung der Karkasse. Jede radiale Einbiegung der Reifenkarkasse führt zu einer Schallabstrahlung in den Reifenhohlraum, die Schwingschnelle der Struktur wird den angrenzenden Luftmolekülen aufgeprägt. Dadurch bilden sich Schalldruckmaxima und -minima innerhalb des Reifentorus, die dazu führen, dass Reifen und Felgenbett abwechselnd gedehnt und gestaucht werden. So entsteht eine oszillierende Kraft auf den Radträger, die über das Fahrwerk in den Fahrzeuginnenraum übertragen wird.

Für den unbelasteten ruhenden Reifen, der eine ideale torusförmige Geometrie aufweist, können die Frequenzen für die Hohlraummoden entlang der drei Raumrichtungen des Reifens mit folgender Formel berechnet werden:

$$f(i_u, j_a, k_r) = \sqrt{\left(\frac{2i_u}{L_u}\right)^2 + \left(\frac{j_a}{L_a}\right)^2 + \left(\frac{k_r}{L_r}\right)^2} \quad (1)$$

Dabei bezeichnet $f$ die Frequenz, $i_u$ die i-te Ordnung der Hohlraummode in Umfangsrichtung, $j_a$ die j-te Ordnung der Hohlraummode in axialer Richtung, $k_r$ die k-te Ordnung der Hohlraummode in radialer Richtung, $L_u$ die Umfangslänge des Reifentorus, $L_a$ die Breite des Reifentorus und $L_r$ die Höhe des Reifentorus.

Da die Eigenfrequenzen in radialer und axialer Richtung oberhalb des körperschallrelevanten Frequenzbereichs liegen, genügt es für die Geräuschbelastung im Fahrzeuginnenraum die Frequenz der Hohlraummode in Umfangsrichtung zu betrachten. Damit vereinfacht sich Gleichung (1) zu:

$$f(i_u) = i_u \frac{c}{\lambda} = i_u \frac{c}{L_u} = i_u \frac{c}{2\pi r_m} \quad (2)$$

Dabei stellt $f(i_u)$ die i-te Eigenfrequenz der Hohlraummode in Umfangsrichtung, $c$ die Schallgeschwindigkeit, $\lambda$ die Wellenlänge und $r_m$ den mittleren Radius des Reifentorus dar.

Aus Gleichung (2) geht hervor, dass sich eine Hohlraumresonanz in Umfangsrichtung ausbildet, wenn die Schallwellenlänge gerade einem ganzzahligen Vielfachen der Reifentoruslänge entspricht. Für die Geräuschbelastung im Fahrzeuginneren ist hierbei insbesondere die erste Hohlraumresonanz von Bedeutung. Diese tritt gemäß Gleichung (2) bei einer Schallgeschwindigkeit von ca. $c$ = 340 m/s und einer mittleren Umfangslänge des Reifentorus von $L_u$ = 1,5 m bei 227 Hz auf.

Im realen Fahrbetrieb beobachtet man jedoch zwei messbare Hohlraumresonanzen, die abhängig von der Reifendeformation im Latsch und der Fahrgeschwindigkeit um jeweils ca. 5 bis 20Hz nach oben und unten von der Eigenfrequenz des idealen Torus abweichen.

Bei Geschwindigkeiten kleiner 30 km/h und einer starken Einfederung des Reifens bilden sich in Umfangsrichtung zwei orthogonale Hohlraummoden erster Ordnung aus, die jeweils eine symmetrische Lage zur Aufstandsfläche des Reifens aufweisen (Vertikalmode und Horizontalmode). Dabei kann die Vertikalmode der höheren und die Horizontalmode der niedrigeren Frequenz zugeordnet werden. Ursache für die Ausbildung dieser beiden Hohlraummoden ist die Deformation im Latsch des Reifens, welche die Rotationssymmetrie des torusförmigen Reifenhohlraums stört und zu einer Beschleunigung der Luftströmung in der Verengung durch den Latsch führt.

Bei Geschwindigkeiten größer 30 km/h und einer geringen Einfederung des Reifens misst man ebenfalls zwei Hohlraumresonanzen, die jedoch nicht aus zwei unterschiedlichen Hohlraummoden resultieren, sondern in der Rotation des Rades begründet sind. Wird das Rad gedreht, so dreht sich nach wenigen Sekunden die Luft im Inneren des Reifens mit, die Relativgeschwindigkeit zwischen Reifen und Luft geht gegen Null. Bildet sich in der strömenden Luft nun eine stehende Welle aus, so läuft die angeregte Welle in Drehrichtung des Rades und die reflektierte Welle gegen die Drehrichtung des Rades, wodurch sich die Hohlraumresonanz in zwei geschwindigkeitsabhängige Frequenzen aufspaltet (in Drehrichtung hin zu höheren Frequenzen, entgegen der Drehrichtung hin zu niedrigeren Frequenzen). Ferner zeigt die Schwingung mit niedrigerer Frequenz eine niedrigere Amplitude. Dies begründet sich dadurch, dass sich die reflektierte Welle entgegen der Strömung im Reifen ausbreitet.

Beide oben beschriebenen Betriebszustände und die daraus entstehenden Hohlraummoden in Umfangsrichtung sind für den realen Fahrzeugbetrieb von Relevanz, so dass Maßnahmen zur Reduktion des Reifenkavitätsgeräusches bevorzugt auf beide Entstehungsmechanismen abzielen.

Bislang bekannte Mittel zur Reduktion des Reifenkavitätsgeräusches sind im Reifen angebrachte Absorber aus porösen, weichen Materialien. Diese haben jedoch den Nachteil, dass sie den Rollwiderstandsbeiwert und das Gewicht des Reifen erhöhen und sich somit nachteilig auf die Energieeffizienz des Fahrzeugs auswirken. Zudem erschweren sie das Handling beim Reifenwechsel in der Werkstatt und durch die Aufnahme von Feuchtigkeit besteht die Gefahr einer Unwucht. Weiterhin wurden Felgen mit Resonanzräumen zur Dämpfung der Hohlraumresonanzen untersucht. Diese benötigen jedoch einen erheblichen Bauraum im Inneren der Felge und schränken dadurch den Raum für andere Fahrzeugbauteile, wie z.B. Bremsenbauteile, ein.

Es liegt die technische Aufgabe vor, eine Felge für ein Fahrzeugrad und das zugehörige Rad bereitzustellen, welche Geräusche im Fahrzeuginnenraum reduzieren, die durch Hohlraumresonanzen im Reifen verursacht werden. Bevorzugt sollen keine zusätzlichen Bauteile erforderlich sein und der Bauraum für andere Fahrzeugkomponenten, wie z.B. die Bremse, soll nicht eingeschränkt werden.

Die Aufgabe wird von dem Gegenstand gemäß den unabhängigen Patentansprüchen gelöst. Weitere bevorzugte technische Weiterentwicklungen sind in den abhängigen Patentansprüchen beschrieben.

Ein Aspekt einer hier beschriebenen Felge für ein Fahrzeugrad zur Geräuschreduzierung kann eine innere Felgenschulter, eine äußere Felgenschulter und ein Felgenbett umfassen. "Innere Felgenschulter" soll bezeichnen, dass diese Felgenschulter, wenn die Felge an einem Fahrzeug montiert ist, im Querschnitt der Felge auf einer der Fahrzeuglängsmittelebene zugewandten/näheren Seite angeordnet ist. "Äußere Felgenschulter" soll ferner bedeuten, dass diese Felgenschulter, wenn die Felge an dem Fahrzeug montierten ist, im Querschnitt der Felge auf einer der Fahrzeuglängsmittelebene abgewandten Seite angeordnet ist, d.h. weiter von der Fahrzeuglängsmittelebene entfernt ist als die innere Felgenschulter.

Das Felgenbett kann zwischen der inneren und der äußeren Felgenschulter angeordnet sein. Besonders bevorzugt ist das Felgenbett für die hier beschriebene Offenbarung so definiert, dass es zwischen den beiden Innenkanten der inneren und äußeren Felgenschulter angeordnet ist. Die Positionierung des Felgenbettes zwischen den beiden Felgenschultern soll insbesondere auf die Lage zwischen den beiden Felgenschultern in Richtung der Rotationsachse der Felge bezogen sein.

Der Begriff "integral" soll insbesondere einstückig bedeuten und besonders bevorzugt ist die Felge aus einem Guss hergestellt. Die Felge kann bevorzugt im Metallgussverfahren hergestellt werden und dreidimensionalen Oberflächenstrukturen des Felgenbettes, die Erhebungen und Vertiefungen umfassen/sein können, können während des Gussvorgang ausgeprägt, d.h. in Form gegossen, werden. Somit erfordert die Herstellung der dreidimensionalen Oberflächenstrukturen keinen separaten Arbeitsschritt und keine zusätzlichen Materialien, sondern erfolgt im Rahmen des Gießprozesses mittels einer entsprechend angepassten Gussform, die die negative Form der dreidimensionalen Oberflächenstrukturen aufweist.

Das Felgenbett kann wie beschrieben dreidimensionale Oberflächenstrukturen aufweisen, die dessen Mantelfläche, insbesondere die Grundform der Mantelfläche modifizieren bzw. dreidimensional verformen. Beispielsweise kann die Grundform der Mantelfläche (Grundmantelfläche) konisch, zylindrisch oder abschnittsweise konisch und zylindrisch geformt sein. Weitere kleinere Abweichungen von den genannten Formen sind abschnittsweise auch möglich, beispielsweise wenn ein zylindrischer und ein konischer Abschnitt vorgesehen sind, so können in deren Übergängen auch weitere Formen vorliegen.

Die Grundmantelfläche wird durch die dreidimensionalen Oberflächenstrukturen in ihrer Form abschnittsweise oder über den gesamten Bereich des Felgenbettes abgewandelt; beispielsweise dadurch, dass im Querschnitt des Felgenbettes eine Vertiefung oder eine Erhebung (herausstehender Abschnitt) eingebracht wird.

Die dreidimensionalen Oberflächenstrukturen sind derart konfiguriert, d.h. insbesondere in ihrer Form derart gewählt und/oder bezüglich ihrer Positionierung derart angeordnet, dass die Geräuschbelastung im Fahrzeuginnenraum durch Luftschwingungen im Bereich der Reifenkavität (d.h. zwischen Felge und Innenseite eines darauf montierten Reifens) reduziert werden kann.

Bezüglich des Merkmales "... eine Mantelfläche des Felgenbettes (5) eine oder mehreren dreidimensionale Oberflächenstrukturen aufweist, die dazu eingerichtet sind, Luftschwingungen zwischen einer Reifeninnenwandwand eines auf der Felge montierten Reifens und dem Felgenbett zu modulieren." sei angemerkt, dass es im Rahmen der hier beschriebenen Offenbarung umfasst sein soll, dass dieses Merkmal durch eine konkrete Anordnung und/oder Positionierung bzw. Ausgestaltung der dreidimensionalen Oberflächenstrukturen, wie nachfolgend beschrieben und/oder in den Figuren gezeigt, ersetzt werden kann.

Die im Zusammenhang mit den nachfolgend genauer beschriebenen bevorzugten Aspekten der/des hier beschriebenen Felge/Rades ist gemein, dass die dreidimensionalen Oberflächenstrukturen im Bereich des Felgenbettes zu einer Verbesserung des Geräuschpegels innerhalb des Fahrzeuginnenraumes führen können. Dieser technische Effekt wird wie folgt dargelegt erzielt. Die Fläche des Felgenbettes wird zunächst vergrößert. Dadurch wird die Anregung des Radträgers gedämpft, da die in den Reifen eingeleitete Kraft auf eine größere Fläche verteilt wird und somit ein geringerer Maximaldruck im Reifen herrscht. Des Weiteren können die als Erhebungen und Vertiefungen ausgestalteten Oberflächenstrukturen derart gestaltet sein, dass die Reifenquerschnittsfläche bei Einfederung des Reifens geringer eingeschnürt und somit der Ausbildung einer Horizontalmode entgegengewirkt wird. Zudem wird die Reflexion der umlaufenden Schallwellen an der Felgenbettmantelfläche durch die Erhebungen und Vertiefungen gestört. Je nach ihrer geometrischen Ausgestaltung bewirken die Erhebungen und Vertiefungen eine Streuung und/oder Absorption der einfallenden Schallwellen. Durch die Streuung der einfallenden Schallwelle auf den unebenen Oberflächen der Erhebungen und Vertiefungen wird die spekulare Reflexion der Schallwelle reduziert und somit der Entstehung einer stehenden Welle entgegengewirkt. Ergeben sich aufgrund der Anordnung der Erhebungen und Vertiefungen reduzierte/schmalere Strömungsquerschnitte, so erhöht sich darin die Reibung der Luftmoleküle und ein Teil der einfallenden Schallwelle kann durch Umwandlung in Wärme absorbiert werden.

Gemäß einem bevorzugten Aspekt können die dreidimensionalen Oberflächenstrukturen eine entlang der Umfangsrichtung durchgehend verlaufende Erhebung und eine daran in Richtung einer Rotationsachse der Felge sich direkt anschließende in Umfangsrichtung verlaufende Vertiefung umfassen. Ferner, wenn man einen Querschnitt durch die Felge entlang der Rotationsachse betrachtet, können die eine Erhebung und die eine Vertiefung zusammen betrachtet eine S-Form aufweisen.

Der Begriff "Erhebung" soll insbesondere einen aus der Grundmantelfläche des Felgenbettes in radialer Richtung herausstehenden Anteil bzw. Abschnitt des Felgenbettes bezeichnen, während der Begriff "Vertiefung" insbesondere einen unterhalb (in radialer Richtung) der Grundmantelfläche des Felgenbettes angeordneten bzw. abgesenkten Anteil bzw. Abschnitt des Felgenbettes bezeichnen soll. Die Bezeichnung "auf dem Felgenbett" bedeutet insbesondere "auf der dem Reifen zugewandten Grundmantelfläche des Felgenbettes" bzw. "auf der der Rotationsachse abgewandten Grundmantelfläche des Felgenbettes".

Es wird angenommen, dass die Felge rotationssymmetrisch ist und eine Rotationsachse aufweist. Die Umfangsrichtung verläuft entsprechend um die Rotationsachse herum. Nachfolgend werden insbesondere Querschnitte entlang der Rotationsachse oder senkrecht dazu herangezogen, um bestimmte Formen etc. zu beschreiben.

Die Erhebung gepaart mit der Vertiefung gemäß dem vorliegenden Aspekt können Schwingungen zwischen einer Reifeninnenwandwand eines auf der Felge montierten Reifens (bzw. einem dort zu montierenden Reifens) und dem Felgenbett modulieren. Der Begriff "modulieren" soll hier alle Möglichkeiten erfassen, die Weitergabe der geräuscherzeugenden Schwingungen aus der Reifenkavität in den Fahrzeuginnenraum zu reduzieren bzw. die dadurch verursachten Geräuschbelastung zu vermindern. Bevorzugt werden insbesondere Dämpfungsvorgänge bzw. Eigenfrequenzveränderungen.

Der oben beschriebene technische Effekt wird besonders günstig erreicht, wenn zumindest ein größerer Teilabschnitt der Gesamtbreite des Felgenbettes die Erhebung und Vertiefung aufweist.

Der oben beschriebene technische Effekt wird noch weiter begünstigt, wenn das Felgenbett zwei in der Rotationsachsenrichtung der Felge sich aneinander anschließende Abschnitte aufweist, wobei ein erster Abschnitt eine zylindrische Grundmantelfläche aufweist und ein zweiter Abschnitt eine konusförmige Grundmantelfläche aufweist, und wobei die Erhebung und die Vertiefung im Bereich des zweiten Abschnittes angeordnet sind. Insbesondere gilt dies, wenn diese dreidimensionale Oberflächenstruktur (im Querschnitt s-förmig) möglichst weit in Richtung der inneren Felgenschulter im zweiten Abschnitt angeordnet ist. Hintergrund ist, dass aufgrund der konischen Form des zweiten Abschnittes die Höhe der s-förmigen Oberflächenstruktur auch einen weiteren ausgeprägten Effekt auf die Abstände zu der Reifeninnenoberfläche ausübt (verglichen mit einer Positionierung im ersten Abschnitt).

Gemäß einem weiteren Aspekt können die dreidimensionalen Oberflächenstrukturen eine Vielzahl von zueinander in Umfangsrichtung der Felge beabstandet angeordneten Erhebungen umfassen, die parallel zu einer Rotationsachsenrichtung der Felge verlaufend ausgerichtet sind oder die mit einem vorbestimmten Winkel zu der Rotationsachsenrichtung der Felge verlaufend ausgerichtet sind. Mit anderen Worten können sich die ein oder mehrere Erhebungen sowie (falls optional vorgesehen: die ein oder mehrere Vertiefungen) unter einem vordefinierten Winkel zur Umfangsrichtung über eine Breite des Felgenbettes erstrecken. Dies bedeutet, die Erhebungen und Vertiefungen können an der einen Felgenschulter beginnen und unter dem vordefinierten Winkel durchgängig bis zur anderen Felgenschulter verlaufen. Der vordefinierte Winkel liegt dabei bevorzugt in einem Bereich von 5 bis 90° und besonders bevorzugt in einem Bereich von 30 bis 90°. Dabei können die Erhebungen und die Vertiefungen wiederum parallel zueinander und im Wechsel angeordnet sein. Mit anderen Worten, sowohl die Erhebungen als auch die Vertiefungen können unter dem gleichen vordefinierten Winkel zur Umfangsrichtung angeordnet sein, und in senkrechter Richtung zur Ausbreitungsrichtung der Erhebungen und Vertiefungen kann eine Vertiefung auf eine Erhebung folgen und umgekehrt.

Diese Ausrichtung der Erhebungen (und optional Vertiefungen) bewirkt eine zusätzliche Störung der Schallwellenausbreitung durch die Störung der Reifeninnenströmung an der Grenzschicht zur Felgenbettmantelfläche. Je größer der vordefinierte Winkel gewählt wird, desto höher wird der Strömungswiderstand, wodurch die Reifeninnenströmung abgebremst und die Schallwellenausbreitung verlangsamt wird.

Bevorzugt, wie bereits oben erläutert, können die Vielzahl von zueinander in Umfangsrichtung der Felge beabstandet angeordneten Erhebungen eine Gesamtbreite des Felgenbettes bedecken. Deren Querschnitt kann senkrecht zu der Rotationsachsenrichtung der Felge bevorzugt rechteckig oder viereckig sein, da dadurch ein besonders hoher Luftwiderstand erzielt wird.

Es hat sich als besonders technisch bevorzugt im Hinblick auf die Geräuschoptimierung herausgestellt, wenn die Vielzahl von zueinander in Umfangsrichtung der Felge beabstandet angeordneten Erhebungen gleichverteilt über die Umfangsrichtung angeordnet sind und die Abstände zwischen den Erhebungen in Umfangsrichtung gleich der Breite der Erhebungen in Umfangsrichtung sind.

Gemäß einem weiteren bevorzugten Aspekt können die dreidimensionalen Oberflächenstrukturen eine Vielzahl entlang der Umfangsrichtung verlaufender Erhebungen und Vertiefungen umfassen, die in einer Rotationsachsenrichtung der Felge im Wechsel zueinander angeordnet sind. Eine Kombination aus Erhebungen und Vertiefungen wirkt sich positiv auf die Schallstreueigenschaften aus. Während eine konkave Vertiefung dazu führen kann, dass der reflektierte Schall in einem Brennpunkt konzentriert wird, bewirkt der direkte Übergang einer konkaven Vertiefung in eine konvexe Erhebung, dass der Brennpunkt eliminiert und der Schall diffus gestreut wird.

Alternativ können die ein oder mehrere Erhebungen und die ein oder mehrere Vertiefungen derart auf dem Felgenbett angeordnet sein, dass eine Erhebung beabstandet von einer benachbarten Vertiefung angeordnet ist und umgekehrt. Diese Anordnung ist vorteilhaft, wenn die Erhebungen und Vertiefungen unterschiedliche Eigenschaften aufweisen sollen. Beispielsweise können die Erhebungen derart dimensioniert werden, dass sie verstärkt der Schallstreuung dienen, während die Vertiefungen derart ausgeführt werden, dass sie verstärkt zur Schallabsorption beitragen.

Gemäß einem weiteren bevorzugten Aspekt können ein oder mehreren dreidimensionalen Oberflächenstrukturen einen kreissegmentförmigen, einen rechteckförmigen und/oder einen polygonförmigen Querschnitt aufweisen. Ferner können diese jeweils die gleiche Höhe oder Tiefe aufweisen.

Die oben genannten Formen unterstützen die Streuung von einfallenden Schallwellen. Sie tragen außerdem zur Schallabsorption bei, da die Zwischenräume dieser Strukturen verengt sind. Dies gilt insbesondere, wenn Querschnitte verwendet werden deren Breite sich mit zunehmender Tiefe verringert. Aufgrund des flachen Einfallswinkels der umlaufenden Schallwelle sind bereits Verengungen mit einer geringen Tiefe, im relevanten Frequenzbereich wirksam, da die Absorbertiefe durch den flachen Einfallswinkel deutlich erhöht wird. Dies bedeutet, dass die Länge der Verengungen in Umfangsrichtung zur Absorbertiefe beitragen kann. Insofern eine abweiche Ausformung, z.B. eine ungleiche Höhe/Tiefe der dreidimensionalen Oberflächenstrukturen, bei einer Radgeometrie diesen Effekt erzielt, so können diese auch unterschiedliche Höhen oder Tiefen aufweisen.

Gemäß einem weiteren bevorzugten Aspekt können die dreidimensionalen Oberflächenstrukturen vielfach wiederholte geometrische Elemente umfassen, die als Pyramiden, Zylinder, Kugelsegmente und/oder Prismen ausgeführt sind. Dies bedeutet, dass auf dem Felgenbett z. B. eine Vielzahl von pyramidenförmigen Erhebungen angeordnet sein kann. Alternativ können unterschiedliche Geometrietypen kombiniert werden, z. B. halbkugelförmige Erhebungen mit quader- oder wabenförmigen Vertiefungen. Im ersten Fall können die pyramidenförmigen Erhebungen z. B. dicht aneinander gereiht auf dem Felgenbett angeordnet sein, so dass sich enge Zwischenräume zwischen den einzelnen Elementen ergeben und eine Oberflächenstruktur entsteht, die einer porösen Struktur gleicht und damit gute Absorptionseigenschaften besitzt. Im zweiten Fall können die halbkugelförmigen Erhebungen und die quader- oder wabenförmigen Vertiefungen z. B. derart aufeinander abgestimmt werden, dass die Schallwelle eine Vielzahl von Reflexionen zwischen diesen Elementen erfährt und dadurch einer stehenden Welle entgegengewirkt wird.

Bezüglich insbesondere der Höhe der dreidimensionalen Oberflächenstrukturen/ geometrischen Elemente ist bevorzugt, dass diese nicht höher als die Felgenschultern ausgeprägt sind (d.h. dass die dreidimensionalen Oberflächenstrukturen/ geometrischen Elemente in radialer Richtung nicht über die Felgenschultern hinausstehen) und in jedem Fall niedriger sind als die Felgenhörner. Dies reduziert den möglichen Aufwand bei der Montage des Reifens auf der Felge. Ganz besonders bevorzugt weisen die Felgenschultern eine reifenabrutschsichernde Ausformung (Hump) auf und die Erhebungen sind in radialer Richtung bevorzugt maximal genauso hoch wie diese Ausformung bzw. wie eine dieser Ausformungen.

Gemäß weiterer bevorzugter Aspekte kann das Felgenbett zwei in der Rotationsachsenrichtung der Felge sich aneinander anschließende Abschnitte aufweisen. Ei ein erster Abschnitt kann eine zylindrische Grundmantelfläche und ein zweiter Abschnitt eine konusförmige Grundmantelfläche aufweisen. Die vorbeschriebenen geometrischen Elemente/dreidimensionalen Oberflächenstrukturen können entweder innerhalb beider Abschnitte oder ausschließlich innerhalb des zweiten Abschnittes angeordnet sein, um größtmögliche Wirkung auf die Luftschwingungen auszuüben.

Es können auch Unterabschnitte zu dem ersten und zweitem Abschnitt in dem Felgenbett vorgesehen sein, die streifenförmig in Umfangsrichtung der Felge und/ oder quer dazu in Rotationsachsenrichtung ausgerichtet sind und in denen keine geometrischen Elemente angeordnet sind. Dies führt dazu, dass weitere Unterbrechungen des Luftflusses erzeugt werden, die zu einer weiteren geräuschmindernden Modifikation der Luftschwingungen führen.

So kann beispielsweise ein in Umfangsrichtung ausgerichteter Unterabschnitt in dem Übergang von dem ersten zu dem zweiten Abschnitt des Felgenbettes angeordnet sein, der weniger breit ist als die mit geometrischen Elementen bedeckten Bereiche des ersten und zweiten Abschnittes. Zusätzlich oder alternativ dazu können mehrere entlang der Umfangsrichtung gleichverteilte angeordnete in Richtung der Rotationsachse der Felge ausgerichtete Unterabschnitte vorgesehen sein. Dadurch entstehen über den Felgenbettumfang Segmente mit gleicher Oberflächenstruktur, welche die Schallstreuung und -absorption nochmals verbessern können.

Weiterhin wird hier ein Rad für ein Fahrzeug beschrieben, dass eine Radnabenbohrung, eine oder mehrere Speichen, und die Felge nach zumindest einem der vorangegangenen Aspekte umfassen kann. Die Radbauteile können mehrteilig sein und besonders bevorzugt können sie integral miteinander verbunden sein. Noch bevorzugter ist das Rad gussgeformt und aus Metall gefertigt. Des Weiteren können die einzelnen dreidimensionalen geometrischen Elemente als Pyramiden, Zylinder, Kugelsegmente und/oder Prismen ausgeführt sein.

Zusammenfassend ermöglicht die Erfindung somit, dass die Geräuschbelastung im Fahrzeuginnenraum durch das Reifenkavitätsgeräusch reduziert wird. Die Umsetzung der geräuschreduzierenden Maßnahmen erfordern keine zusätzlichen Bauteile an Rad oder Reifen und der Herstellungsprozess des Fahrzeugrades wird durch die Maßnahmen nicht beeinträchtigt.

Die Erfindung wird im Folgenden exemplarisch mit Bezug auf die beigefügten, schematischen Zeichnungen beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche. Es zeigen

Fig. 1 ein Beispiel für eine Geometrie eines Leichtmetallrades nach dem Stand der Technik;

Fig. 2 ein erstes Beispiel für die Gestaltung einer Felge zur Reduktion von Geräuschen im Fahrzeuginnenraum;

Fig. 3 ein zweites Beispiel für die Gestaltung einer Felge, zur Reduktion von Geräuschen im Fahrzeuginnenraum;

Fig. 4 ein drittes Beispiel für die Gestaltung einer Felge zur Reduktion von Geräuschen im Fahrzeuginnenraum;

Fig. 5 ein viertes Beispiel für die Gestaltung einer Felge zur Reduktion von Geräuschen im Fahrzeuginnenraum;

Fig. 6 ein fünftes Beispiel für die Gestaltung einer Felge zur Reduktion von Geräuschen im Fahrzeuginnenraum; und

Fig. 7 ein sechstes Beispiel für die Gestaltung einer Felge zur Reduktion von Geräuschen im Fahrzeuginnenraum.

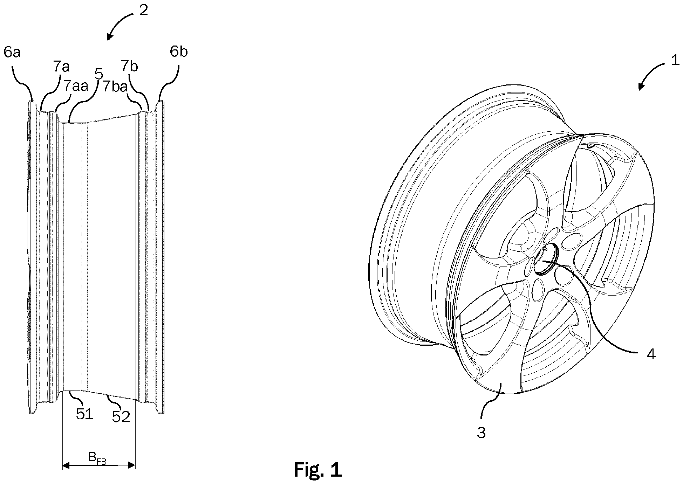

In Fig. 1 wird ein Beispiel für eine Geometrie eines Leichtmetallrades für einen Pkw gemäß dem Stand der Technik dargestellt. Das dargestellte Fahrzeugrad 1 weist eine Felge 2 sowie mehrere Speichen 3 und eine Radnabenbohrung 4 auf. Die Speichen 3 verbinden die Felge 2 mit der Radnabenbohrung 4. Auf der Felge 2 sitzt der Reifen (nicht dargestellt).

Die Felge 2 umfasst ein äußeres Felgenhorn 6a und ein inneres Felgenhorn 6b. Die Felgenhörner 6a, 6b stellen den seitlichen Anschlag für den Reifenwulst dar und nehmen die aus dem Reifendruck und der axialen Reifenbelastung resultierenden Kräfte auf. Ferner umfasst die Felge 2 eine äußere Felgenschulter 7a mit einem Hump 7aa und eine innere Felgenschulter 7b mit einem Hump 7ba sowie ein asymmetrisches Felgenbett 5. Das Felgenbett umfasst einen ersten Abschnitt 51, der eine zylindrische Grundmantelfläche aufweist (Tiefbett) und einen zweiten Abschnitt 52, der eine konusförmige Grundmantelfläche aufweist und den ersten Abschnitt 51 mit der inneren Felgenschulter 7b verbindet. Die Felgenschultern 7a, 7b zentrieren den Reifen in radialer Richtung und nehmen insbesondere die aus dem Fahrzeuggewicht resultierenden Kräfte auf. Der Hump 7aa, 7ab stellt eine umlaufende Erhöhung der jeweiligen Felgenschulter 7a, 7b der Felge 2 dar und sorgt für einen sicheren Sitz des Reifens auf der Felge 2 (reifenabrutschsichernde Ausformung). Das Felgenbett 5 erstreckt sich in Rotationsachsenrichtung der Felge über die Breite $B_{FB}$ zwischen den Felgenschultern 7a, 7b und verbindet diese miteinander.

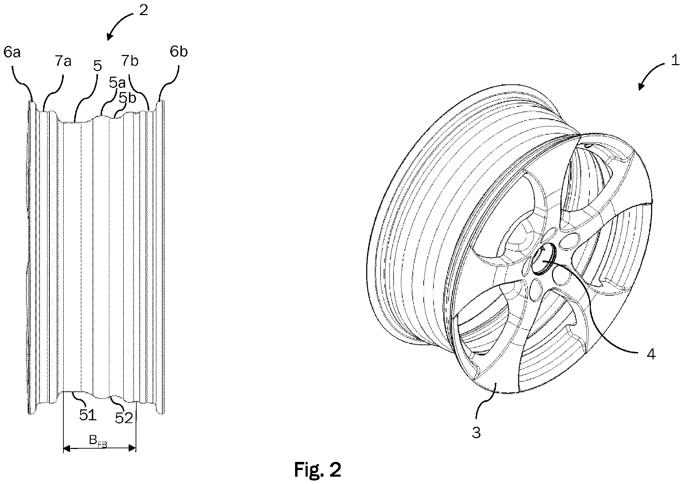

Fig. 2 zeigt ein erstes Beispiel für die Gestaltung einer geräuschreduzierenden Felge 2, wobei die Felge 2 auf dem zweiten Abschnitt 52 des Felgenbettes 5 mehrere Erhebungen 5a und 5b mit einem kreissegmentförmigen Querschnitt aufweist, die entlang der Umfangsrichtung der Felge 2 durchgehend verlaufen. Eine Vertiefung 5b schließt dabei in Rotationsachsenrichtung der Felge 2 direkt an eine Erhebung 5a an, so dass im Querschnitt entlang der Rotationsachse durch die Felge 2 eine Erhebung 5a und eine Vertiefung 5b zusammen eine S-Form aufweisen. Dadurch weist das Felgenbett 5 auf der dem Reifenhohlraum zugewandten Seite im Bereich des zweiten Abschnitts 52 eine gewölbte Oberfläche auf, an der die einfallenden Schallwellen gestreut werden.

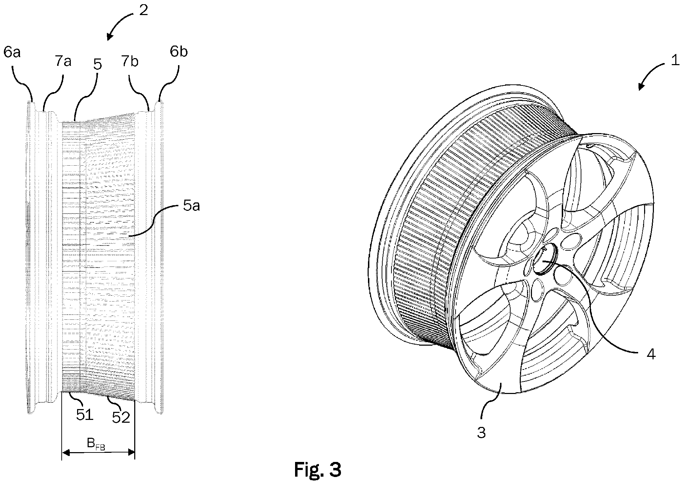

Fig. 3 zeigt ein zweites Beispiel für die Gestaltung einer geräuschreduzierenden Felge 2, wobei die Felge 2 auf dem Felgenbett 5 eine Vielzahl von Erhebungen 5a mit einem trapezförmigen Querschnitt aufweist, die sich in Rotationsachsenrichtung der Felge 2 über die gesamte Breite $B_{FB}$ des Felgenbettes 5 erstrecken. Die in Umfangsrichtung der Felge beabstandet angeordneten Erhebungen 5a weisen eine geringe Breite in Umfangsrichtung sowie einen geringen Abstand zwischen zwei Erhebungen 5a auf, so dass sich eine rillenförmige Oberflächenstruktur ergibt, bei der die Rillen in Rotationsachsenrichtung verlaufen. Trifft eine Schallwelle auf dieser Rillenstruktur auf, so werden die Luftmoleküle in den Rillen zu Schwingungen angeregt, bei denen aufgrund der hohen inneren Reibung in den schmalen Rillen ein Teil der Schallenergie in Wärme umgewandelt und somit absorbiert wird.

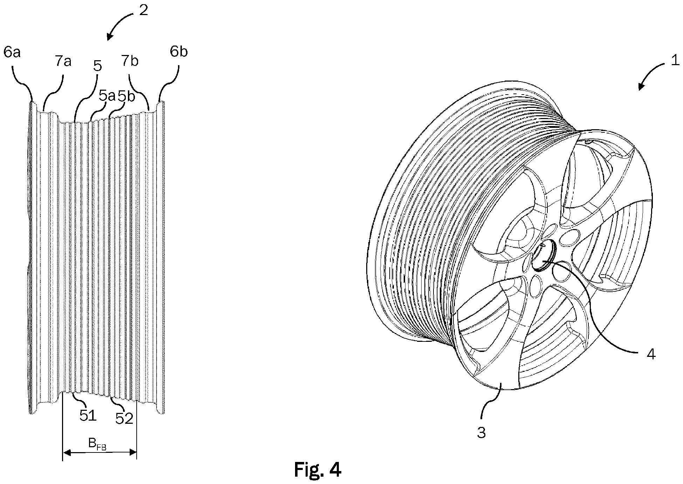

Fig. 4 zeigt ein drittes Beispiel für die Gestaltung einer Felge 2 zur Geräuschreduzierung, bei dem die Felge 2 auf dem Felgenbett 5 Erhebungen 5a mit einem kreissegmentförmigen Querschnitt und Vertiefungen 5b mit einem quaderförmigen Querschnitt aufweist, die sich in Umfangsrichtung über den Umfang des Felgenbettes 5 erstrecken. Die Erhebungen 5a und Vertiefungen sind in der Rotationsachse der Felge 2 im Wechsel angeordnet. Die dem Reifenhohlraum zugewandte Felgenbettmantelfläche weißt eine Vielzahl Erhebungen 5a auf, da die zwischen den Erhebungen 5a angeordneten Vertiefungen 5b sehr schmal ausgeführt sind. Dadurch entstehen umlaufende Rillen, die den Schall absorbieren können, während die Wölbungen zur Schallstreuung dienen.

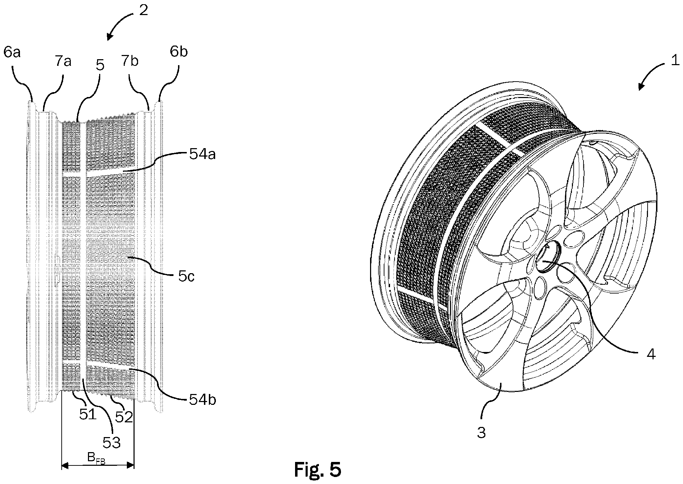

Fig. 5 zeigt ein viertes Beispiel für die Gestaltung einer geräuschreduzierenden Felge 2, wobei die Felge 2 auf dem Felgenbett 5 eine Vielzahl dreidimensionaler geometrischer Elemente 5c aufweist, die als pyramidenförmige Erhebungen ausgeführt sind. Die einzelnen Elemente 5c sind mit einem sehr geringen Abstand in Umfangsrichtung und Rotationsachsenrichtung der Felge 2 nebeneinander angeordnet. Sie werden durch streifenförmige in Rotationsrichtung der Felge 2 angeordnete Unterabschnitte 54a, 54b in Gruppen mit gleicher Anzahl an Elementen 5c aufgeteilt, so dass über den Felgenbettumfang Segmente mit gleicher Oberflächenstruktur entstehen. Zudem sind die auf dem ersten Abschnitt 51 der Felge 2 angeordneten Elemente 5c durch einen streifenförmigen Unterabschnitt in Umfangsrichtung der Felge 2 von den übrigen auf dem Felgenbett 5 angeordneten Elementen 5c getrennt. Durch die dichte Aneinanderreihung der pyramidenförmigen Erhebungen innerhalb der Segmente auf dem Felgenbett 5 entsteht eine Oberflächenstruktur, die einer porösen Struktur gleicht und damit gute Absorptionseigenschaften besitzt.

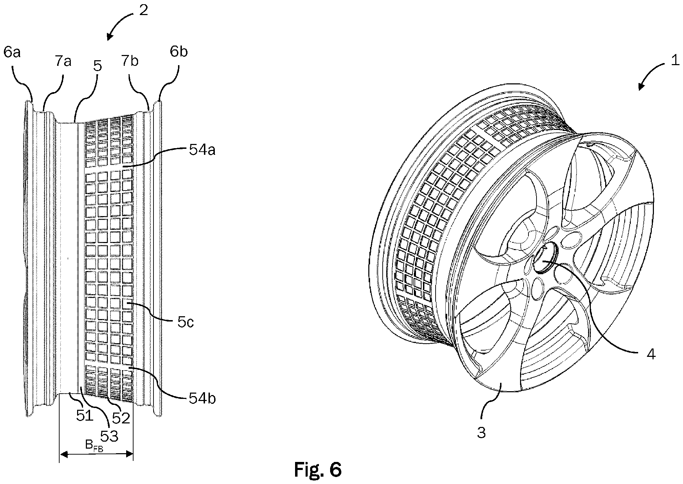

Fig. 6 zeigt ein fünftes Beispiel für die Gestaltung einer geräuschreduzierten Felge 2, wobei die Felge 2 auf dem zweiten Abschnitt 52 des Felgenbettes 5 dreidimensionale geometrische Elemente 5c aufweist, die als quaderförmige Vertiefungen ausgeführt und mit geringem Abstand zueinander angeordnet sind. Auch hier wird die Oberflächenstruktur durch streifenförmige in Rotationsrichtung der Felge angeordnete Unterabschnitte 541, 54b in Segmente mit gleicher Elementanzahl aufgeteilt, wobei der erste Abschnitt 51 des Felgenbettes eine glatte Mantelfläche zeigt. Durch die quaderförmigen Vertiefungen ergeben sich Kammern in der dem Reifen zugewandten Felgenbettmantelfläche, die eine Resonatorwirkung entfalten und somit zur Schallabsorption beitragen können. Aufgrund des flachen Einfallswinkels der umlaufenden Schallwelle sind bereits geringe Tiefen der Kammern ausreichend, um eine Resonanzwirkung zu erzielen, da im Wesentlichen die Schallwelle zwischen Stirnseiten der Kammern reflektiert und damit gedämpft wird. Die Aufteilung der Oberflächenstruktur in Segmente mit gleicher Anzahl Resonanzkammern kann die Resonatorwirkung nochmals verbessern.

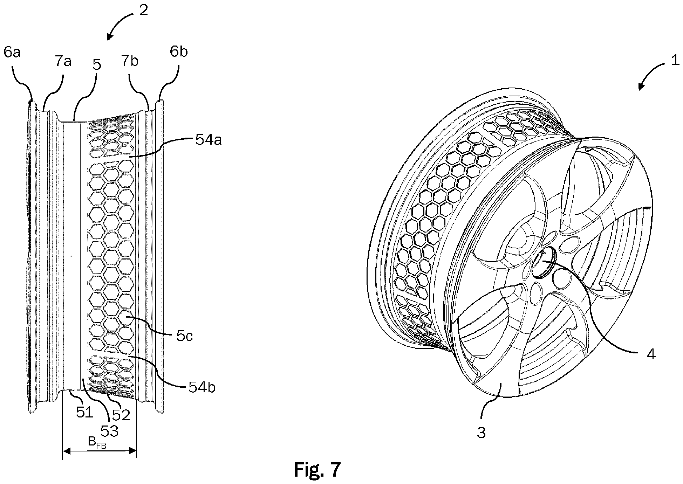

Fig. 7 zeigt ein sechstes Beispiel für die Gestaltung einer geräuschreduzierten Felge 2, wobei die Felge 2 auf dem zweiten Abschnitt 52 des Felgenbettes 5 dreidimensionale geometrische Elemente 5c aufweist, die als wabenförmige Vertiefungen ausgeführt sind. Die Wabenstruktur ist in einzelne Segmente mit gleicher Anzahl geometrische Elemente 5c aufgeteilt, der erste Abschnitt 51 des Felgenbettes 5 weist eine glatte Mantelfläche auf. Ähnlich wie die quaderförmigen Vertiefungen wirken auch die wabenförmigen Vertiefungen als Resonatoren und dienen somit der Schallabsorption.

Zusammenfassend ist festzuhalten, dass es die Erfindung ermöglicht die Geräuschbelastung im Fahrzeuginnenraum durch das Reifenkavitätsgeräusch zu reduzieren. Dabei erfordert die Umsetzung der geräuschreduzierenden Maßnahmen keine zusätzlichen Bauteile an Rad oder Reifen und der Herstellungsprozess des Fahrzeugrades wird durch die Maßnahmen nicht beeinträchtigt.

Bezugszeichen

| 1 | Fahrzeugrad, Rad |
|---|---|
| 2 | Felge |
| 3 | Speichen |
| 4 | Radnabenbohrung |
| 5 | Felgenbett |
| 5a | Erhebung |
| 5b | Vertiefung |
| 5c | dreidimensionales geometrisches Element |
| 51 | erster Abschnitt des Felgenbettes |
| 52 | zweiter Abschnitt des Felgenbettes |
| 53 | streifenförmiger Abschnitt in Umfangsrichtung der Felge |
| 54a, 54b | streifenförmige Abschnitte in Rotationsachsenrichtung der Felge |
| 6a | äußeres Felgenhorn |
| 6b | inneres Felgenhorn |
| 7a | äußere Felgenschulter |
| 7b | innere Felgenschulter |
| 7aa, 7ba | Hump |

**Patentansprüche**

1. Felge (2) eines Fahrzeugrades (1) zur Reduktion von Geräuschen in einem Fahrzeuginnenraum, umfassend

   eine innere Felgenschulter (7a),
   eine äußere Felgenschulter (7b), und
   ein Felgenbett (5), das zwischen der inneren und der äußeren Felgenschulter (7a, 7b) angeordnet ist, wobei die innere Felgenschulter (7a), die Felgenschulter (7b) und das Felgenbett (5) integral miteinander verbunden sind, und
   eine Mantelfläche des Felgenbettes (5) eine oder mehreren dreidimensionale Oberflächenstrukturen aufweist, die dazu eingerichtet sind, Luftschwingungen zwischen einer Reifeninnenwandwand eines auf der Felge (2) montierten Reifens und dem Felgenbett (5) zu modulieren.

2. Felge (2) nach Anspruch 1 **gekennzeichnet dadurch, dass** die dreidimensionalen Oberflächenstrukturen eine entlang einer Umfangsrichtung der Felge (2) durchgehend verlaufende Erhebung (5a) und eine daran in Richtung einer Rotationsachse der Felge (2) sich direkt anschließende in Umfangsrichtung verlaufende Vertiefung (5b) umfassen, wobei in einem Querschnitt entlang der Rotationsachse durch die Felge (2) die Erhebung (5a) und die Vertiefung (5b) zusammen eine S-Form aufweisen.

3. Felge (2) nach Anspruch 2 **gekennzeichnet dadurch, dass** die Erhebung (5a) und die Vertiefung (5b) in der Richtung der Rotationsachse der Felge (2) zumindest einen Teilabschnitt der Gesamtbreite des Felgenbettes (5) umfassen.

4. Felge (2) nach Anspruch 3 **gekennzeichnet dadurch, dass** das Felgenbett (5) zwei in der Rotationsachsenrichtung der Felge (2) sich aneinander anschließende Abschnitte (51, 52) aufweist, wobei ein erster Abschnitt (51) eine zylindrische Grundmantelfläche aufweist und ein zweiter Abschnitt (52) eine konusförmige Grundmantelfläche aufweist, wobei die Erhebung (5a) und die Vertiefung (5b) im Bereich des zweiten Abschnittes (52) angeordnet sind, so dass die Mantelfläche des Felgenbettes (5) im Bereich der Erhebung (5a) und der Vertiefung (5b) eine entsprechende Formabweichung von der Konusform der Grundmantelfläche des zweiten Abschnittes (52) aufweist.

5. Felge (2) nach Anspruch 1 **gekennzeichnet dadurch, dass** die dreidimensionalen Oberflächenstrukturen eine Vielzahl von zueinander in Umfangsrichtung der Felge (2) beabstandet angeordneten Erhebungen (5a) umfassen, die parallel zu der Rotationsachsenrichtung der Felge (2) verlaufend ausgerichtet sind oder die mit einem vorbestimmten Winkel zu der Rotationsachsenrichtung der Felge (2) verlaufend ausgerichtet sind.

6. Felge (2) nach Anspruch 5 **gekennzeichnet dadurch, dass** die Vielzahl von zueinander in Umfangsrichtung der Felge beabstandet angeordneten Erhebungen (5a) eine Gesamtbreite des Felgenbettes (5) bedecken und deren Querschnitt senkrecht zu der Rotationsachsenrichtung der Felge (2) rechteckig oder viereckig ist.

**7.** Felge (2) nach Anspruch 6 **gekennzeichnet dadurch, dass** die Vielzahl von zueinander in Umfangsrichtung der Felge (5) beabstandet angeordneten Erhebungen (5a) gleichverteilt über die Umfangsrichtung der Felge (2) angeordnet sind und die Abstände zwischen den Erhebungen in Umfangsrichtung gleich der Breite der Erhebungen (5a) in Umfangsrichtung sind.

**8.** Felge (2) nach Anspruch 1 **gekennzeichnet dadurch, dass** die dreidimensionalen Oberflächenstrukturen eine Vielzahl entlang der Umfangsrichtung der Felge (2) verlaufender Erhebungen (5a) und Vertiefungen (5b) umfassen, die in der Rotationsachsenrichtung der Felge (2) im Wechsel zueinander angeordnet sind.

**9.** Felge (2) nach zumindest einem der vorangegangenen Ansprüche **gekennzeichnet dadurch, dass** die ein oder mehreren dreidimensionalen Oberflächenstrukturen jeweils einen kreissegmentförmigen, einen rechteckförmigen und/oder einen polygonförmigen Querschnitt aufweisen.

**10.** Felge (2) nach zumindest einem der vorangegangenen Ansprüche **gekennzeichnet dadurch, dass** die ein oder mehreren dreidimensionale Oberflächenstrukturen jeweils eine gleiche Höhe bzw. Tiefe aufweisen.

**11.** Felge (2) nach zumindest einem der vorangegangenen Ansprüche, **dadurch gekennzeichnet, dass** die dreidimensionalen Oberflächenstrukturen vielfach wiederholte geometrischen Elemente (5c) umfassen, wobei die geometrischen Elemente (5c) als Pyramiden, Zylinder, Kugelsegmente und/oder Prismen ausgeführt sind.

**12.** Felge (2) nach Anspruch 11, **dadurch gekennzeichnet, dass** das Felgenbett (5) zwei in der Rotationsachsenrichtung der Felge (2) sich aneinander anschließende Abschnitte (51, 52) aufweist, wobei ein erster Abschnitt (51) eine zylindrische Grundmantelfläche aufweist und ein zweiter Abschnitt (52) eine konusförmige Grundmantelfläche aufweist, wobei die geometrischen Elemente (5c) entweder innerhalb beider Abschnitte (51, 52) oder ausschließlich innerhalb des zweiten Abschnittes (52) angeordnet sind.

**13.** Felge (2) nach Anspruch 12, **dadurch gekennzeichnet, dass** Unterabschnitte (53, 54a, 54b) zu dem ersten und zweitem Abschnitt (51, 52) in dem Felgenbett (5) vorgesehen sind, die streifenförmig in Umfangsrichtung der Felge (2) und/oder in Rotationsachsenrichtung der Felge (2) ausgerichtet sind und in denen keine geometrischen Elemente (5c) angeordnet sind.

**14.** Felge (2) nach Anspruch 13, **dadurch gekennzeichnet, dass** ein in Umfangsrichtung ausgerichteter Unterabschnitt (53) in dem Übergang von dem ersten zu dem zweiten Abschnitt (51, 52) des Felgenbettes (5) angeordnet ist und weniger breit ist als die mit geometrischen Elementen (5c) bedeckten Bereiche des ersten und zweiten Abschnittes (51, 52), und/oder mehrere entlang der Umfangsrichtung der Felge (2) gleichverteilt angeordnete in Richtung der Rotationsachse der Felge (2) ausgerichtete Unterabschnitte (54a, 54b)vorgesehen sind.

**15.** Rad (1) für ein Fahrzeug umfassend

eine Radnabenbohrung (4),
eine oder mehrere Speichen (3), und
die Felge (2) nach zumindest einem der vorangegangenen Ansprüche, wobei
die vorgenannten Bauteile integral miteinander verbunden sind.

**16.** Rad (1) gemäß Anspruch 15, **gekennzeichnet dadurch, dass** das Rad (1) ein einstückig gussgeformtes Metallrad ist.

Fig. 1

**Fig. 2**

**Fig. 3**

6a  7a  5  7b  6b
2
5a 5b
51  52
$B_{FB}$
1
4
3

**Fig. 4**

Fig. 5

Fig. 6

Fig. 7

**Europäisches Patentamt**
**European Patent Office**
**Office européen des brevets**

# EUROPÄISCHER RECHERCHENBERICHT

Nummer der Anmeldung

EP 20 17 6568

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 826 949 A (BORTOLONI ANDREA [IT]) 27. Oktober 1998 (1998-10-27) | 1-16 | INV. B60B21/02 |
| Y | * Abbildungen * | 11 | |
| | ----- | | |
| X | DE 20 2008 005455 U1 (FUCHS KG OTTO [DE]) 27. August 2009 (2009-08-27) | 1-4,8-16 | |
| Y | * Absätze [0011], [0012], [0019]; Abbildungen * | 11 | |
| | ----- | | |
| X | DE 10 2017 204769 A1 (AUDI AG [DE]) 27. September 2018 (2018-09-27) | 1,9-16 | |
| Y | * Absätze [0019] - [0021]; Abbildungen * | 11 | |
| | ----- | | |
| X | DE 10 2009 030377 A1 (FRAUNHOFER GES FORSCHUNG [DE]) 30. Dezember 2010 (2010-12-30) * Abbildungen 2,3 * | 1,9-16 | |
| | ----- | | |
| A | US 2015/048669 A1 (ZHU JINSHUO [US] ET AL) 19. Februar 2015 (2015-02-19) * Abbildungen * | 1-16 | |
| | ----- | | |

**RECHERCHIERTE SACHGEBIETE (IPC)**

B60B

Der vorliegende Recherchenbericht wurde für alle Patentansprüche erstellt

| Recherchenort | Abschlußdatum der Recherche | Prüfer |
|---|---|---|
| München | 8. Oktober 2020 | Landriscina, V |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 6568

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2020

| Im Recherchenbericht angeführtes Patentdokument | Datum der Veröffentlichung | Mitglied(er) der Patentfamilie | Datum der Veröffentlichung |
|---|---|---|---|
| US 5826949 A | 27-10-1998 | KEINE | |
| DE 202008005455 U1 | 27-08-2009 | KEINE | |
| DE 102017204769 A1 | 27-09-2018 | KEINE | |
| DE 102009030377 A1 | 30-12-2010 | DE 102009030377 A1<br>EP 2445730 A1<br>ES 2406906 T3<br>WO 2010149364 A1 | 30-12-2010<br>02-05-2012<br>10-06-2013<br>29-12-2010 |
| US 2015048669 A1 | 19-02-2015 | CN 104369627 A<br>DE 102014111553 A1<br>US 2015048669 A1 | 25-02-2015<br>19-02-2015<br>19-02-2015 |

Für nähere Einzelheiten zu diesem Anhang : siehe Amtsblatt des Europäischen Patentamts, Nr.12/82

EPO FORM P0461